# EUROPEAN PATENT SPECIFICATION

(11) **EP 3 509 176 B1**
(45) Date of publication and mention of the grant of the patent: **03.04.2024**
(21) Application number: 17845701.6
(22) Date of filing: 05.01.2017
(51) Int. Cl.: H02G 5/06, H02B 13/055

(54) **GAS-INSULATED SWITCHGEAR AND METHOD FOR CAPTURING METAL IMPURITIES INSIDE GAS-INSULATED SWITCHGEAR**
GASISOLIERTE SCHALTANLAGE UND VERFAHREN ZUR ERFASSUNG VON METALLVERUNREINIGUNGEN IN GASISOLIERTER SCHALTANLAGE
APPAREILLAGE DE COMMUTATION À ISOLATION GAZEUSE ET PROCÉDÉ DE CAPTURE D'IMPURETÉS MÉTALLIQUES À L'INTÉRIEUR D'UN APPAREILLAGE DE COMMUTATION À ISOLATION GAZEUSE

(30) Priority: 31.08.2016 JP 2016169207
(43) Date of publication of application: 10.07.2019
(73) Proprietor: Kabushiki Kaisha Toshiba, Minato-ku Tokyo 105-8001 (JP); Toshiba Energy Systems & Solutions Corporation, Kawasaki-shi, Kanagawa 212-0013 (JP)
(72) Inventor: YASUOKA, Takanori, Tokyo 105-8001 (JP); MATSUBARA, Manaho, Tokyo 105-8001 (JP); SHIIKI, Motoharu, Tokyo 105-8001 (JP); NAKANO, Osamu, Tokyo 105-8001 (JP); NOJIMA, Kenichi, Tokyo 105-8001 (JP); ABE, Yuta, Tokyo 105-8001 (JP)
(74) Representative: AWA Sweden AB
(86) International application number: PCT/JP2017/000106
(87) International publication number: WO 2018/042690

(56) References cited:
- JP-A- S 552 321
- JP-A- H0 731 039
- JP-A- H0 993 735
- JP-A- H0 998 526
- JP-A- H10 322 865
- JP-A- H11 262 144
- JP-A- S57 153 510
- JP-A- 2000 253 548
- JP-A- 2003 224 921
- JP-A- 2008 259 388
- JP-U- S5 761 919
- JP-U- S5 956 916
- JP-U- S54 172 253
- JP-U- S55 163 719
- US-A- 5 798 484

## Description

### [Technical Field]

The present invention relates to a gas-insulated switchgear and a method for capturing metallic particles in a gas-insulated switchgear.

### [Background Art]

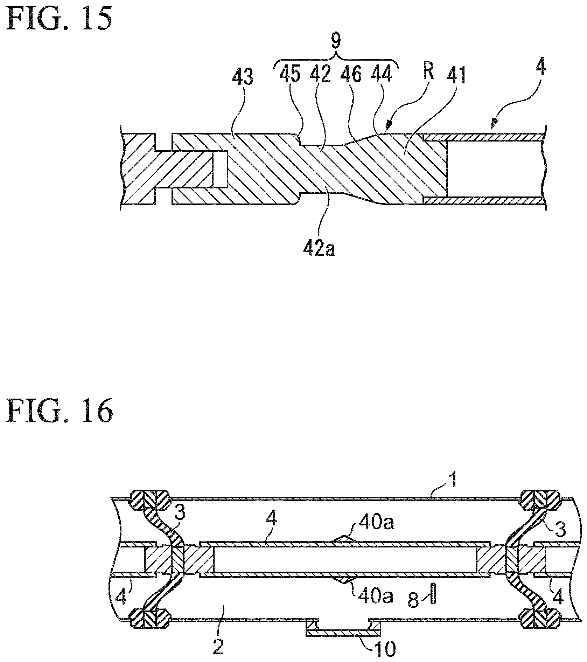

In the related art, there is a gas-insulated switchgear in which a metallic enclosure 1 sealed at a ground potential as illustrated in Fig. 16 has an insulating gas 2 filled therein at a high pressure and a high voltage conductor 4 and a truncated-cone-shaped insulating support 3 configured to support the high voltage conductor 4 are provided in the metallic enclosure 1.

In a gas-insulated switchgear, optimization of an insulation design and further reduction in size of devices have been promoted to reduce manufacturing costs and reduce an environmental load. One of concerns at such a time was metallic particles 8 present in the metallic enclosure 1. When the metallic particles 8 float with a Coulomb's force in the metallic enclosure 1, the insulation performance of the device deteriorates due to an unequal electric field formed due to the metallic particles 8. For this reason, if harmful metallic particles 8 are present in the metallic enclosure 1, it is necessary to remove the metallic particles 8 before operation. As one of methods for this, a method of collecting the metallic particles 8 at an inclined-portion corner portion 40a which is a high electric field portion of a high voltage conductor in a firefly state in which the metallic particles 8 float with the Coulomb's force in the metallic enclosure 1, reach the high voltage conductor 4, and move in the vicinity of the high voltage conductor 4 and then reducing or stopping an applied voltage such that the metallic particles fall into and are captured by a metallic particle attracting unit has been used in the related art.

JP S54172253 U relates to a gas-insulated electric device and discloses a conductor including a first portion extending linearly, a second portion thinner than the first portion, a first rounded part between the first portion and the second portion, a third portion thicker than the second portion, and a second rounded part between the third portion and the second portion.

JP H07 31039 A relates to a gas insulated bus and discloses a high voltage conductor.

US 5 798 484 relates to an electric power transformation installation and, in particular an enclosed electric conductor arrangement for a DC current transmission in which an insulating gas and an electric conductor are sealingly enclosed in a tubular container.

### [Prior art Literature]

### [Patent Literature]

[Patent Literature 1]
   Japanese Unexamined Patent Application, First Publication No. 2000-253548
[Patent Literature 2]
   Japanese Unexamined Patent Application, First Publication No. H9-98526
[Patent Literature 3]
   Japanese Unexamined Patent Application, First Publication No. H10-322865
[Patent Literature 4]
   Japanese Unexamined Patent Application, First Publication No. 2008-259388
[Patent Literature 5]
   Japanese Unexamined Patent Application, First Publication No. S58-111203
[Patent Literature 6]
   Japanese Unexamined Patent Application, First Publication No. 2010-207047
[Patent Literature 7]
   Japanese Unexamined Patent Application, First Publication No. 2010-93873
[Patent Literature 8]
   Japanese Unexamined Patent Application, First Publication No. H8-237836
[Patent Literature 9]
   Japanese Unexamined Patent Application, First Publication No. 2013-176275
[Patent Literature 10]
   Japanese Unexamined Patent Application, First Publication No. 2014-017972

### [Summary of Invention]

### [Issue to be solved by Invention]

Incidentally, capturing harmful metallic particles more efficiently which serves as a constraint factor for device miniaturization is expected.

Therefore, an objective of the present invention is to more efficiently capture harmful metallic particle serving as a constraint factor of device miniaturization.

### [Solution to the Issue]

A gas-insulated switchgear according to the invention comprises: a metallic enclosure having an insulating gas enclosed therein, wherein the metallic enclosure includes a bottom surface; an electroconductive conductor accommodated in the metallic enclosure; an insulating support configured to insulate and support the metallic enclosure and the conductor; and a metallic particle capturing unit disposed under a part of the conductor, wherein the metallic particle capturing unit is provided on the bottom surface of the metallic enclosure. The conductor includes: a first portion extending linearly in an axial direction of the conductor and forming a main portion of the conductor; a second portion thinner than the first portion; a first rounded part which is provided at a boundary portion between the first portion and the second portion, and which is configured to, from the first portion toward the second portion, be thinner, wherein a degree of inclination of the first rounded part with respect to a central line in a longitudinal direction of the conductor gradually increases from the first portion toward the second portion; a third portion which is positioned on a side opposite to the first portion with respect to the second portion and is thicker than the second portion; and a second rounded part which is provided at a boundary portion between the third portion and the second portion , and which is configured to, from the third portion toward the second portion, be thinner, wherein a degree of inclination of the second rounded part with respect to the central line in the longitudinal direction of the conductor gradually increases from the third portion toward the second portion. The first portion and the first rounded part are disposed to be closer to a central portion in the metallic enclosure than the second portion. The third portion and the second rounded part are disposed to be closer to the insulating support than the second portion. A radius of curvature of the first rounded part is larger than a radius of curvature of the second rounded part. The second portion, the first rounded part, and the second rounded part are exposed inside the enclosure and form a high-voltage-side particle trap, and the metallic particle capturing unit is disposed below the second portion, the first rounded part, and the second rounded part.

### [Brief Description of Drawings]

Fig. 1 is a cross-sectional view of a gas-insulated switchgear according to a first embodiment not forming part of the invention.
Fig. 2 is a cross-sectional view of a gas-insulated switchgear according to a second embodiment not forming part of the invention.
Fig. 3 is a cross-sectional view of a gas-insulated switchgear according to a third embodiment not forming part of the invention.
Fig. 4 is a cross-sectional view of a gas-insulated switchgear according to a fourth embodiment not forming part of the invention.
Fig. 5 is a cross-sectional view of a gas-insulated switchgear according to a fifth embodiment not forming part of the invention.
Fig. 6 is a cross-sectional view of a gas-insulated switchgear according to a sixth embodiment not forming part of the invention.
Fig. 7 is a cross-sectional view of a gas-insulated switchgear according to a seventh embodiment not forming part of the invention.
Fig. 8 is a cross-sectional view of a gas-insulated switchgear according to an eighth embodiment not forming part of the invention.
Fig. 9 is a cross-sectional view of a gas-insulated switchgear according to a ninth embodiment not forming part of the invention.
Fig. 10 is a diagram for explaining a behavior of metallic particles in Fig. 1.
Fig. 11 is a cross-sectional view of a gas-insulated switchgear according the invention.
Fig.12 is a diagram for explaining a behaviour of metallic particles in a gas-insulated switchgear according to the invention. Fig. 13 is a diagram for explaining a behaviour of metallic particles in a gas-insulated switchgear according to the invention.
Fig. 14 is a diagram for explaining a relationship between an electric field value of a conductor and states of metallic particles.
Fig. 15 is a cross-sectional view of a gas-insulated switchgear according to a modified example of the invention.
Fig. 16 is a cross-sectional view illustrating a constitutional example of a gas-insulated switchgear in the related art.

### [Description of Embodiments]

Embodiments will be described below with reference to the drawings.

### (First embodiment) (Not forming part of the invention)

### (Constitution)

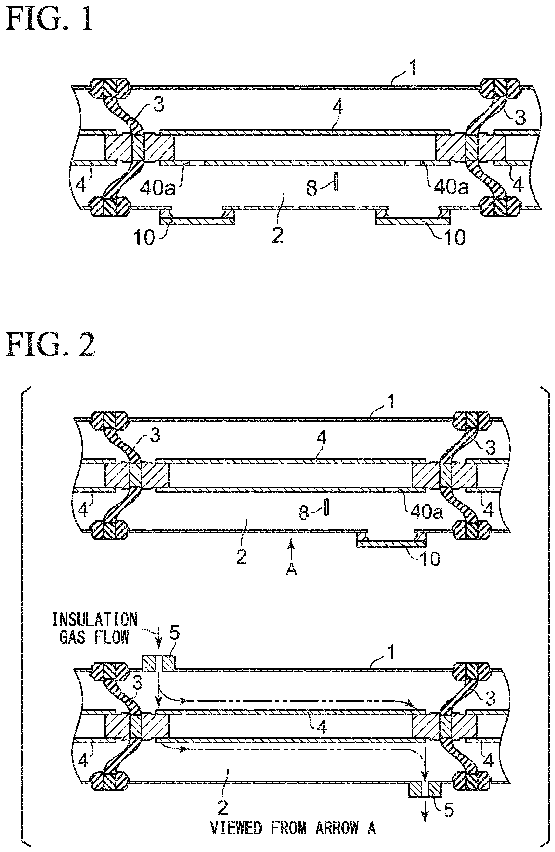

As illustrated in Fig. 1, in a gas-insulated switchgear in this embodiment, a sealed metallic enclosure 1 at a ground potential is filled with an insulating gas 2 at a high pressure and a truncated-cone-shaped insulating support 3 is provided in the metallic enclosure 1. A high voltage conductor 4 is supported by the truncated-cone-shaped insulating support 3. A metallic particle capturing unit 10 is provided on a bottom surface of the metallic enclosure 1. In the high voltage conductor 4 located above the metallic particle capturing unit 10, a metallic particle attracting unit 40a which is a locally high electric field unit is provided in the vicinity of the insulating support 3.

The metallic particle capturing unit 10 is provided in the vicinity of a lower portion in a vertical direction of the metallic particle attracting unit 40a when it is defined that a force of gravity acts in a downward direction in the drawing in Fig. 1 at the time of installation. It should be noted that the metallic particle capturing unit 10 is not present on the bottom surface portion of the metallic enclosure 1 at the time of manufacturing or storage in some cases.

### (Action)

An action of the gas-insulated switchgear in this embodiment will be described below.

A direct current (DC) voltage is applied to the high voltage conductor 4 in at least one of a routine test and a field test before the gas-insulated switchgear operates. Metallic particles 8 in the metallic enclosure 1 rise and (or) float due to a Coulomb's force occurring due to such applied DC voltage.

The metallic particles 8 floating to the vicinity of the high voltage conductor 4 change an amount of charged electric charge from moment to moment due to the influence of a partial discharge and the ionization of a surrounding insulating gas 2 and mainly move in the vicinity of the high voltage conductor 4 in a radial direction of the high voltage conductor 4 while receiving a Coulomb's force Fq according to this.

At this time, the metallic particles 8 exchange electric charges with the high voltage conductor 4 and the surrounding insulating gas 2 and thus move in a direction in which the metallic particles 8 are attracted to the high voltage conductor 4 or move in a direction in which the metallic particles 8 and the high voltage conductor 4 repel each other. It is assumed that methods of charging the metallic particles 8 are opposite when the metallic particles 8 move in a direction in which the metallic particles 8 are attracted to the high voltage conductor 4 or move in a direction in which the metallic particles 8 and the high voltage conductor 4 repel each other.

Subsequently, a direct current is caused to flow through the high voltage conductor 4 to move the metallic particles 8 in an axial direction of a long bus rod.

A direct current is caused to flow so that a Lorentz force F1 is generated in one direction in proportion to an amount of charged electric charge and a movement speed of the metallic particles 8 irrespective of a direction of the moving metallic particles 8. Thus, it is possible to move the metallic particles 8 in the axial direction of the long bus rod.

As described above, when the metallic particles 8 have been attracted to the metallic particle attracting unit 40a and then a DC voltage applied to the high voltage conductor 4 is decreased or stopped, the metallic particles 8 fall into and are captured by the metallic particle capturing unit 10 disposed below the metallic particle attracting unit 40a. Since the metallic particle capturing unit 10 has a sufficiently small electric field intensity even when a voltage is applied again, the captured metallic particles 8 are less likely to move outside of the metallic particle capturing unit 10 and it is possible to eliminate adverse effects of the captured metallic particles 8 in an insulation manner.

### (Effects)

Here, as an comparative example, a case in which there is no force actively moving the metallic particles 8 in the axial direction of the long bus rod is conceivable. Metallic particles which are present in the metallic enclosure and have a state referred to as "a firefly" in which the metallic particles move and cling to a surface of the high voltage conductor while repeatedly charging and discharging in the vicinity of the high voltage conductor after rising and (or) floating due to a Coulomb's force mainly due to an electric field in the radial direction are strongly influenced mainly by the Coulomb's force due to the electric field in the radial direction. Thus, the metallic particles mainly move in the radial direction of the high voltage conductor. Therefore, since there is no force for actively moving the metallic particles in the axial direction of the long bus rod simply by applying a voltage to the high voltage conductor, particularly, it is difficult to efficiently collect metallic particles present at a place away from, particularly, the metallic particle attracting unit and the metallic particle capturing unit and it is difficult to fully capture metallic particles in some cases.

On the other hand, as in this embodiment, it is possible to more efficiently capture the metallic particles 8 by moving the metallic particles 8 in the axial direction of the long bus rod before operation. Thus, it is possible to improve the reliability of an insulating surface and reduce a size of a device.

### (Second embodiment) (Not forming part of the invention)

### (Constitution)

A second embodiment will be described below with reference to Fig. 2.

In a gas insulation opening device in this embodiment, a sealed metallic enclosure 1 at a ground potential is filled with an insulating gas 2 at a high pressure and a truncated-cone-shaped insulating support 3 is provided in the metallic enclosure 1. A high voltage conductor 4 is supported by the truncated-cone-shaped insulating support 3. Furthermore, a plurality of gas supply ports 5 are provided in the metallic enclosure 1. A metallic particle capturing unit 10 is provided on a bottom surface of the metallic enclosure 1. In the high voltage conductor 4 located above the metallic particle capturing unit 10, a metallic particle attracting unit 40a which is a locally high electric field unit is provided in the vicinity of the insulating support 3.

For example, at least one gas supply port of the plurality of gas supply ports 5 is provided at a position in the metallic enclosure 1 in a lower half in the drawing and the other gas supply port is disposed at a position opposite thereto in the metallic enclosure 1 in an upper portion in the drawing. In addition, the present invention is not limited to such a disposition relationship and positions of two or more gas supply ports 5 can be replaced with various disposition relationships in which gas flows used to guide the metallic particles 8 to the metallic particle capturing unit 10 are generated.

### (Action)

An action of a gas-insulated switchgear in this embodiment will be described below.

When a DC voltage is applied to the high voltage conductor 4 in at least one of a routine test and a field test before the gas-insulated switchgear operates, the metallic particles 8 in the metallic enclosure 1 rise and (or) float due to a Coulomb's force. The metallic particles 8 floating to the vicinity of the high voltage conductor 4 change an amount of charged electric charge from moment to moment due to the influence of a partial discharge and the ionization of a surrounding insulating gas 2 and mainly move in the vicinity of the high voltage conductor 4 in a radial direction of the high voltage conductor 4 while receiving a Coulomb's force Fq according to this. At that time, it is possible to apply a gas flow in an axial direction of a long bus rod to the metallic particles 8 by sending the insulating gas 2 from a windward gas supply port 5 far from the metallic particle attracting unit 40a to a downwind gas supply port 5 near the metallic particle attracting unit 40a. Thus, when the metallic particles 8 are attracted to the metallic particle attracting unit 40a located downwind and then a DC voltage applied to the high voltage conductor 4 is decreased or stopped, the metallic particles 8 fall into and are captured by the metallic particle capturing unit 10 disposed below the metallic particle attracting unit 40a due to their own weights. Since the metallic particle capturing unit 10 has a sufficiently small electric field intensity even when a voltage is applied again, the captured metallic particles 8 are less likely to move outside of the metallic particle capturing unit 10 and it is possible to eliminate adverse effects of the captured metallic particles 8 in an insulation manner.

### (Effects)

In this way, it is possible to more efficiently capture the metallic particles 8 by providing the gas supply ports 5 to generate a gas flow in a direction in which the metallic particles 8 are desired to be attracted and it is possible to improve the reliability of an insulating surface and reduce a size of a device.

### (Third embodiment) (Not forming part of the invention)

### (Constitution)

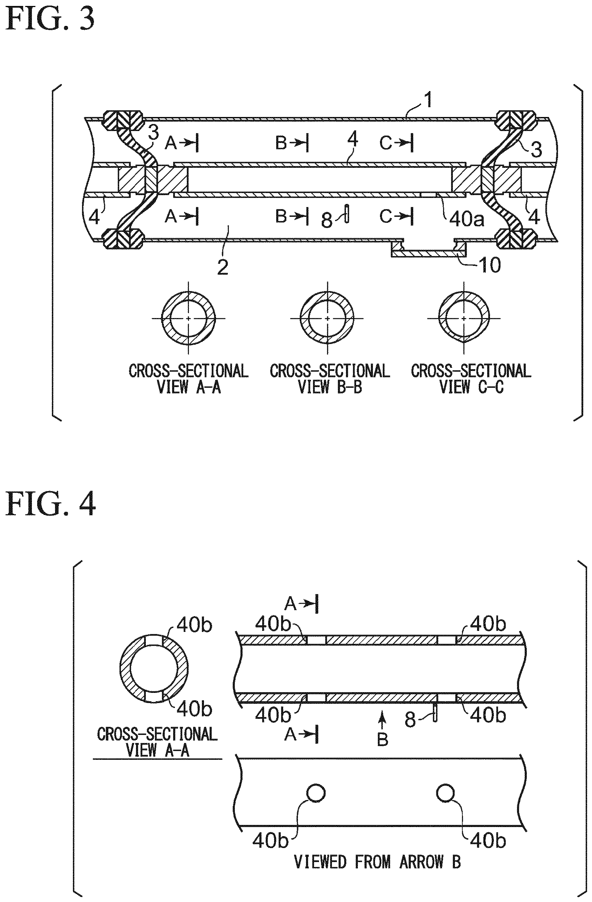

A third embodiment will be described below with reference to Fig. 3.

In a gas insulation opening device in this embodiment, a sealed metallic enclosure 1 at a ground potential is filled with a insulating gas 2 at a high pressure and a truncated-cone-shaped insulating support 3 is provided in the metallic enclosure 1. A cylindrical high voltage conductor 4 is supported by the truncated-cone-shaped insulating support 3. A curvature on the ground side of the outer circumference of the high voltage conductor 4 gradually increases in the axial direction of the high voltage conductor 4. In addition, at a terminal end of the high voltage conductor 4, a metallic particle attracting unit 40a which is a locally high electric field unit is provided in the vicinity of the insulating support 3. The high voltage conductor 4 in this embodiment has a shape obtained by changing a semi-circular curvature on the ground side as illustrated in a cross-sectional view B-B and a cross-sectional view C-C from a substantially perfect circular shape illustrated in a cross-sectional view A-A in Fig. 3. Furthermore, a metallic particle capturing unit 10 is provided on a bottom surface of the metallic enclosure 1 at a lower portion of the metallic particle attracting unit 40a.

### (Action)

An action of a gas-insulated switchgear in this embodiment will be described below.

When a DC voltage is applied to a high voltage conductor 4 in at least one of a routine test and a field test before the gas-insulated switchgear operates, metallic particles 8 in a metallic enclosure 1 rise and (or) float due to a Coulomb's force. The metallic particles 8 floating to the vicinity of the high voltage conductor 4 change an amount of charged electric charge from moment to moment due to the influence of a partial discharge and the ionization of a surrounding insulating gas 2 and mainly move in the vicinity of the high voltage conductor 4 in a radial direction of the high voltage conductor 4 while receiving a Coulomb's force Fq according to this. At that time, the influence of a magnitude of a surface electric field of the high voltage conductor 4 inclined in an axial direction of the high voltage conductor 4 makes it possible for the metallic particles 8 to move in a radial direction of the high voltage conductor 4 and causes the metallic particles 8 to be gradually attracted so that the surface electric field of the high voltage conductor 4 increases. Thus, the metallic particles 8 are attracted to the metallic particle attracting unit 40a provided at a terminal end of an electric field inclination. After that, when a DC voltage applied to the high voltage conductor 4 is decreased or stopped, the metallic particles 8 fall into and are captured by a metallic particle capturing unit 10 disposed below the metallic particle attracting unit 40a due to their own weights. Since the metallic particle capturing unit 10 has a sufficiently small electric field even when a voltage is applied again, the captured metallic particles 8 are less likely to move outside of the metallic particle capturing unit 10 and it is possible to eliminate adverse effects of the captured metallic particles 8 in an insulation manner.

### (Effects)

In this way, it is possible to more efficiently capture the metallic particles 8 and it is possible to improve the reliability of an insulating surface and reduce a size of a device by gradually increasing an electric field in an axial direction of a long bus rod until the metallic particles 8 reach the metallic particle attracting unit 40a using the high voltage conductor 4 for conducting in which a curvature of a place on the ground side of an outer circumference is gradually increased and directing a surface electric field of the high voltage conductor such that it increases along an electric field inclination in an axial direction provided on a surface of the high voltage conductor 4.

### (Fourth embodiment) (Not forming part of the invention)

### (Constitution)

A fourth embodiment will be described below with reference to Fig. 4. Constituent elements that are the same as those of Figs. 1 to 3 will be denoted by the same reference numerals and detailed description thereof will be omitted.

A metal attracting hole 40b in this embodiment has a hole shape as illustrated in a cross-sectional view A-A in Fig. 4 instead of the metal attracting units 40a described in the first embodiment to the third embodiment. One or more metal attracting holes 40b are provided at a portion located above a metallic particle capturing unit 10 of a high voltage conductor 4.

### (Action)

An action of a gas-insulated switchgear in this embodiment will be described below.

By setting the vicinity of a metallic particle attracting hole 40b to have a high electric field, metallic particles 8 approaching the metallic particle attracting hole 40b remain in the vicinity of the metallic particle attracting hole 40b, and at the same time, the vicinity of a central portion of the metallic particle attracting hole 40b is set to have a low electric field. Thus, the metallic particles 8 approaching the central portion of the metallic particle attracting hole 40b fall into the metallic particle capturing unit 10 or are captured in the metallic particle attracting hole 40b in a state in which a voltage has been applied.

### (Effects)

In this way, by forming the metallic particle attracting unit to have a structure such as a hole in which it is easy to manufacture the hole, it is possible to reduce the machining costs of a device. In addition, adverse effects of the harmful metallic particles 8 attracted to the vicinity of the metallic particle attracting hole 40b are eliminated by decreasing or stopping an applied voltage to fall the metallic particles 8 into the metallic particle capturing unit 10. Moreover, in the vicinity of the central portion of the metallic particle attracting hole 40b, also in a state in which a voltage has been applied, even when the metallic particles 8 fall into the metallic particle capturing unit 10 or enter the metallic particle attracting hole 40b to be confined in the metallic particle attracting hole 40b, adverse effects of the metallic particles 8 are eliminated. Thus, it is possible to more efficiently capture the metallic particles 8 and it is possible to improve the reliability of an insulating surface and reduce a size of a device.

### (Fifth embodiment) (Not forming part of the invention)

### (Constitution)

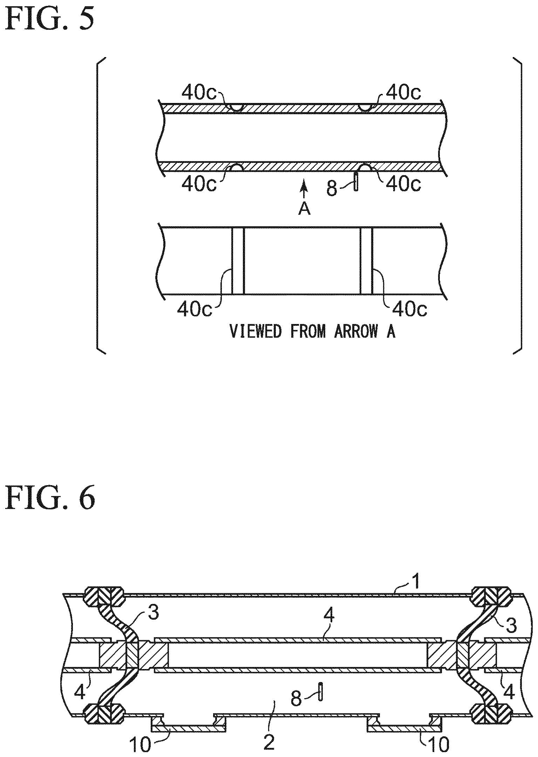

A fifth embodiment will be described below with reference to Fig. 5. Constituent elements that are the same as those of Figs. 1 to 3 will be denoted by the same reference numerals and detailed description thereof will be omitted.

A metal attracting groove 40c in this embodiment has a semi-circular tubular groove shape as illustrated in Fig. 5 instead of the metal attracting units 40a described in the first embodiment to the third embodiment. The metallic particle attracting groove 40c is provided at a position located above a metallic particle capturing unit 10 of a high voltage conductor 4.

### (Action)

An action of a gas-insulated switchgear in this embodiment will be described below.

By setting the vicinity of the metallic particle attracting groove 40c to a high pressure field, metallic particles 8 approaching the metallic particle attracting groove 40c remain in the vicinity of the metallic particle attracting groove 40c, and at the same time, the vicinity of a central portion of the metallic particle attracting groove 40c is set to have a low electric field. Thus, the metallic particles 8 approaching the central portion of the metallic particle attracting groove 40c fall into the metallic particle capturing unit 10 in a state in which a voltage has been applied.

### (Effects)

In this way, by forming the metallic particle attracting unit to have a structure such as a groove in which it is easy to manufacture the groove, it is possible to reduce the machining costs of a device. In addition, the harmful metallic particles 8 attracted to the vicinity of the metallic particle attracting groove 40c fall into and are captured by the metallic particle capturing unit 10 by decreasing or stopping an applied voltage. Moreover, in the vicinity of the central portion of the metallic particle attracting groove 40c, also in a state in which a voltage has been applied, by falling and capturing the metallic particles 8 on and by the metallic particle capturing unit 10, it is possible to more efficiently capture the metallic particles 8 in a shorter time and it is possible to improve the reliability of an insulating surface and reduce a size of a device.

### (Sixth embodiment) (Not forming part of the invention)

### (Constitution)

A sixth embodiment will be described below with reference to Fig. 6.

In a gas insulation opening device in this embodiment, a sealed metallic enclosure 1 at a ground potential is filled with an insulating gas 2 at a high pressure and a truncated-cone-shaped insulating support 3 is provided in the metallic enclosure 1. A high voltage conductor 4 is supported by the truncated-cone-shaped insulating support 3. A metallic particle capturing unit 10 is provided on a bottom surface of the metallic enclosure 1.

### (Action)

An action of a gas-insulated switchgear in this embodiment will be described below.

In the gas-insulated switchgear in this embodiment, an alternating current (AC) voltage or a positive DC voltage is applied to the high voltage conductor 4 in at least one of a routine test and a field test before operation. Metallic particles 8 in the metallic enclosure 1 rise and (or) float due to a Coulomb's force due to the AC voltage or the positive DC voltage applied to the high voltage conductor 4 and thus a crossing state is provided. A state in which the metallic particles 8 irregularly reciprocate between the high voltage conductor 4 and the metallic enclosure 1 at a high speed in the metallic enclosure 1 continues. Thus, the metallic particles 8 are efficiently captured by the metallic particle capturing unit 10 provided on the bottom surface of the metallic enclosure 1.

### (Effects)

In this way, by continuously performing an irregular reciprocating motion on the metallic particles 8 at a high speed before operation, it is possible to more efficiently capture the metallic particles 8. Thus, it is possible to improve the reliability of an insulating surface and reduce a size of a device.

### (Seventh embodiment) (Not forming part of the invention)

### (Constitution)

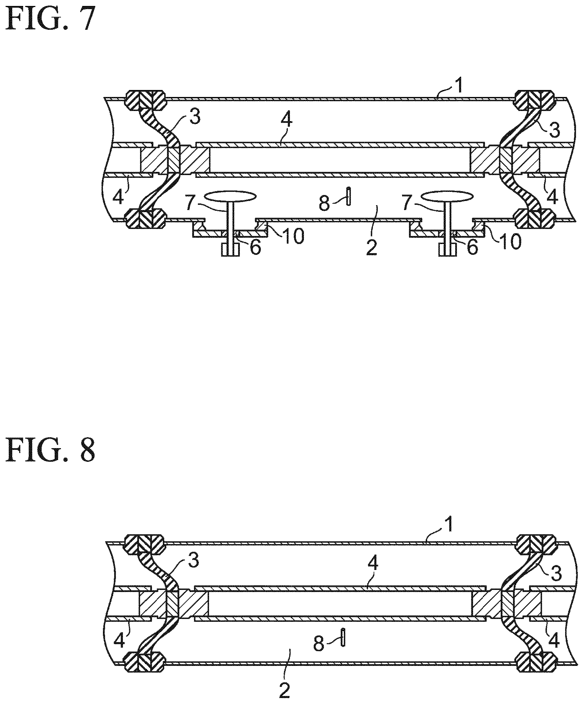

A seventh embodiment will be described below with reference to Fig. 7.

In a gas insulation opening device in this embodiment, a sealed metallic enclosure 1 at a ground potential is filled with an insulating gas 2 at a high pressure and a truncated-cone-shaped insulating support 3 is provided in the metallic enclosure 1. A high voltage conductor 4 is supported by the truncated-cone-shaped insulating support 3. A metallic particle capturing unit 10 is provided on a bottom surface of the metallic enclosure 1. An insertion port 6 is provided on a bottom surface of the metallic particle capturing unit 10. The insertion port 6 is covered in a hermetical and insulation manner. In the metallic particle capturing unit 10, a metallic particle capturing rod 7 having a spreading portion at a distal end portion thereof is usually stored (except during a test) so that an electric field at the distal end portion thereof is not higher than a surface electric field of the surrounding metallic enclosure 1. A constitution in which a rod portion connected to the distal end portion having the spreading portion is connected to the outside through the insertion port 6 and a voltage can be applied to the metallic particle capturing rod 7 from the outside.

### (Action)

An action of a gas-insulated switchgear in this embodiment will be described below.

In the gas-insulated switchgear in this embodiment, a distal end portion of the metallic particle capturing rod 7 is caused to approach a high voltage conductor 4 from a metallic particle capturing unit 10 by pushing a rod portion of a metallic particle capturing rod 7 connected to the outside into the metallic enclosure 1 and then a DC voltage is applied to the metallic particle capturing rod 7 in at least one of a routine test and a field test before operation. Thus, when the metallic particles 8 in the metallic enclosure 1 receives a Coulomb's force, rise and (or) float, and are attracted to the metallic particle capturing rod 7 and then a DC voltage applied to the metallic particle capturing rod 7 is decreased or stopped, the metallic particles 8 fall into and are captured by the metallic particle capturing unit 10 disposed below the metallic particle capturing rod 7 due to their own weight. After that, the rod portion of the metallic particle capturing rod 7 is pulled from the outside and stored again in the metallic particle capturing unit 10.

### (Effects)

In this way, it is possible to more efficiently capture the metallic particles 8 by collecting the metallic particles 8 using the metallic particle capturing rod 7 before operation. Thus, it is possible to improve the reliability of an insulating surface and reduce a size of a device.

Furthermore, even when the metallic particles 8 are generated at the time of taking in and out of the metallic particle capturing rod 7, the metallic particle capturing unit 10 has a sufficiently small electric field intensity. Thus, adverse effects of the metallic particle capturing unit 10 are eliminated in an insulation manner.

### (Eighth embodiment) (Not forming part of the invention)

### (Constitution)

An eighth embodiment will be described below with reference to Fig. 8.

In a gas insulation opening device in this embodiment, a sealed metallic enclosure 1 at a ground potential is filled with an insulating gas 2 at a high pressure and a truncated-cone-shaped insulating support 3 is provided in the metallic enclosure 1 and a high voltage conductor 4 supported by the truncated-cone-shaped insulating support 3.

### (Action)

An action of the gas-insulated switchgear in this embodiment will be described below.

When a DC voltage is applied to the high voltage conductor 4 in at least one of a routine test and a field test before the gas-insulated switchgear operates, metallic particles 8 in the metallic enclosure 1 rise and (or) float due to a Coulomb's force and have a firefly state. In this state, insulation breakdown is caused by superimposing an impulse voltage on the high voltage conductor 4 and thus the metallic particles 8 in the firefly state become a high temperature and disappear through dissolution and (or) evaporation or are reduced to an extent that an adverse effect in insulation performance of a device is regarded not to exert.

### (Effects)

In this way, it is possible to more efficiently reduce the metallic particles 8 or eliminate an adverse effect in insulation performance by injecting high energy due to an impulse voltage to the metallic particles 8 before operation, improve the reliability of an insulating surface, and reduce a size of a device.

### (Ninth embodiment) (Not forming part of the invention)

### (Constitution)

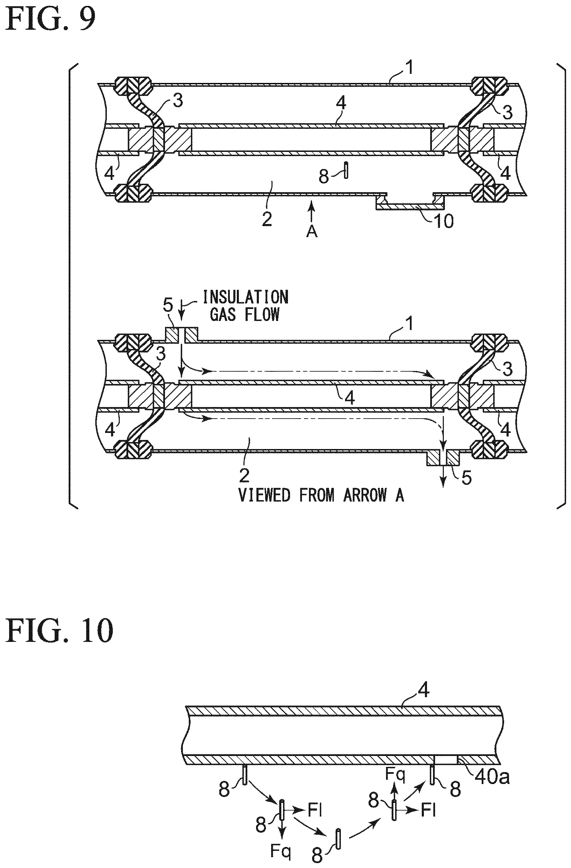

A ninth embodiment will be described below with reference to Fig. 9.

In a gas insulation opening device in this embodiment, a sealed metallic enclosure 1 at a ground potential is filled with an insulating gas 2 at a high pressure and a truncated-cone-shaped insulating support 3 is provided in the metallic enclosure 1. A high voltage conductor 4 is supported by the truncated-cone-shaped insulating support 3. Furthermore, a plurality of gas supply ports 5 are provided in the metallic enclosure 1. A metallic particle capturing unit 10 is provided on a bottom surface of the metallic enclosure 1.

### (Action)

An action of a gas-insulated switchgear in this embodiment will be described below.

When an AC voltage or a positive DC voltage is applied to the high voltage conductor 4 in at least one of a routine test and a field test before the gas-insulated switchgear operates, metallic particles 8 in the metallic enclosure 1 rise and (or) due to a Coulomb's force and have a crossing state. At that time, by sending the insulating gas 2 to a downwind gas supply port 5 near a metallic particle capturing unit 10 rather than a windward gas supply port 5 far from the metallic particle capturing unit 10, it is possible to apply a gas flow in an axial direction of a long bus rod to the metallic particles 8. Thus, since the harmful metallic particles 8 in the metallic enclosure 1 receive a force going downward while irregularly reciprocating between the high voltage conductor 4 and the metallic enclosure 1 at a high speed, the harmful metallic particles 8 are captured in the metallic particle capturing unit 10 located downward. Even when a voltage is applied again, the metallic particle capturing unit 10 has a sufficiently small electric field intensity. Thus, the captured metallic particles 8 do not move outside of the metallic particle capturing unit 10 and an adverse effect of the captured metallic particles 8 is eliminated in an insulation manner.

### (Effects)

In this way, it is possible to more efficiently capture the metallic particles 8 by setting the metallic particles 8 to the crossing state before operation and applying a force directed in one direction in a gas flow. Thus, it is possible to improve the reliability of an insulating surface and reduce a size of a device.

### (Tenth embodiment) (forming part of the invention)

### (Constitution)

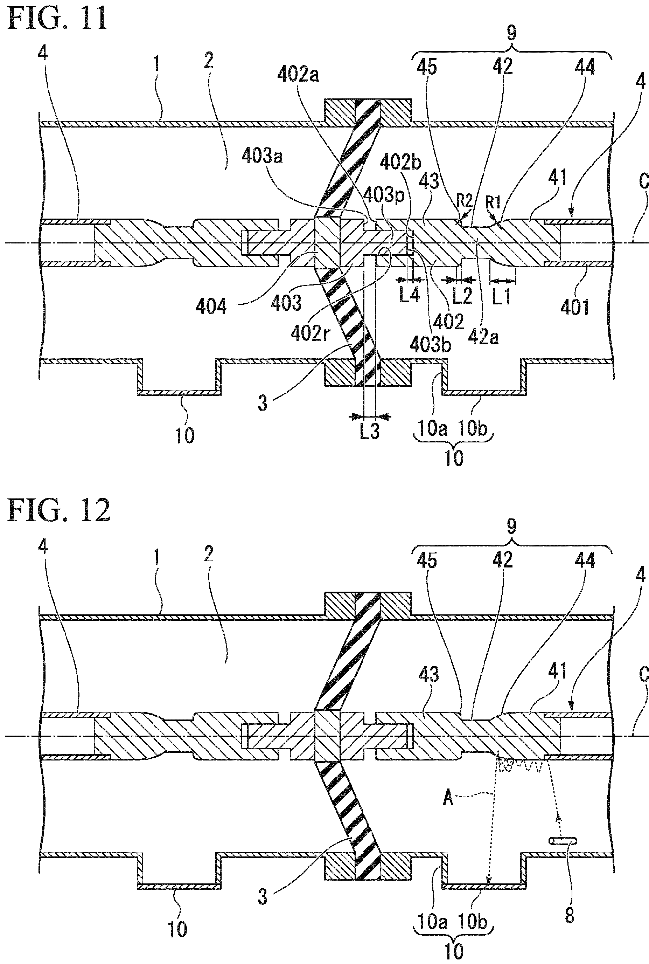

A tenth embodiment will be described below with reference to Figs. 11 to 15.

In a gas insulation opening device in this embodiment (for example, a DC gas insulation opening device), a sealed metallic enclosure 1 at a ground potential is filled with an insulating gas 2 at a high pressure. The insulating gas 2 is, for example, SF6 gas, but may be a gas other than SF6 gas, for example, air, carbon dioxide, oxygen, nitrogen which are gases derived from nature and a mixed gas thereof. High voltage conductors 4 for conducting are accommodated in the metallic enclosure 1. A truncated-cone-shaped insulating support 3 is provided in the metallic enclosure 1. The high voltage conductors 4 are supported by the truncated-cone-shaped insulating support 3 in an insulation manner. Furthermore, a metallic particle capturing unit 10 is provided on a bottom surface of the metallic enclosure 1.

As illustrated in Fig. 11, in this embodiment, the high voltage conductors 4 include a first portion 41, a second portion 42, a third portion 43, a first rounded part 44, and a second rounded part 45.

The first portion 41 extends linearly in an axial direction of the high voltage conductors 4 and forms a main portion of each of the high voltage conductors 4. For example, the first portion 41 extends over both sides of a central portion of the inside of the metallic enclosure 1 in the axial direction of the metallic enclosure 1 (a longitudinal direction of the high voltage conductors 4).

The second portion 42 is provided between the first portion 41 and an end portion of the high voltage conductor 4 supported by the insulating support 3. The second portion 42 is thinner than the first portion 41. For example, a thickness of the second portion 42 is 80% to 95% of a thickness of the first portion 41. The second portion 42 includes, for example, a linear portion 42a extending linearly in the axial direction of the high voltage conductor 4. A length of the second portion 42 is 10 mm to 40 mm. The second portion 42 is shorter in an axial direction of the metallic enclosure 1 than the first portion 41.

The third portion 43 is located on a side opposite to the first portion 41 with respect to the second portion 42. The third portion 43 is located closer to the insulating support 3 than the first portion 41 and the second portion 42. The third portion 43 has, for example, substantially the same thickness as the first portion 41. In other words, the third portion 43 is thicker than the second portion 42.

The first rounded part 44 is provided at a boundary portion between the first portion 41 and the second portion 42. The first rounded part 44 is provided adjacent to the first portion 41. In other words, the first rounded part 44 is provided at a transition portion in which a diameter decreases from the first portion 41 toward the second portion 42 (a portion in which a diameter starts to decrease). The first rounded part 44 is smoothly connected to the first portion 41. The first rounded part 44 becomes thinner from the first portion 41 toward the second portion 42 while a degree of inclination (a degree of bending) of the first rounded part 44 with respect to a central axis of the high voltage conductor 4 (a central line in the longitudinal direction) C gradually increases. In other words, the first rounded part 44 becomes thinner s from the first portion 41 toward the second portion 42 while a rate of change in thickness thereof gradually increases from the first portion 41 toward the second portion 42. It should be noted that "a rate of change in thickness" is an amount of change of a thickness when it goes from the first portion 41 toward the second portion 42 by a unit distance. That is to say, the first rounded part 44 is formed by a fillet. In a cross section in a longitudinal direction of the high voltage conductor 4, the first rounded part 44 has a cross-sectional shape with a circular arc shape which is convex away from the central axis C of the high voltage conductor 4. In this embodiment, the first rounded part 44 is provided between the first portion 41 and the second portion 42 and connects the first portion 41 to the second portion 42. A radius of curvature (a fillet value) R1 of the first rounded part 44 is set, for example, between 10 mm and 400 mm.

The second rounded part 45 is provided at a boundary portion between the third portion 43 and the second portion 42. The second rounded part 45 is provided adjacent to the third portion 43. In other words, the second rounded part 45 is provided at a transition portion in which a diameter decreases from the third portion 43 toward the second portion 42 (a portion in which a diameter starts to decrease). The second rounded part 45 is smoothly connected to the third portion 43. The second rounded part 45 becomes thinner from the third portion 43 toward the second portion 42 while a degree of inclination (a degree of bending) of the second rounded part 45 with respect to the central axis C of the high voltage conductor 4 gradually increases from the third portion 43 toward the second portion 42. In other words, the second rounded part 45 becomes thinner from the third portion 43 toward the second portion 42 while a rate of change in thickness thereof gradually increases from the third portion 43 toward the second portion 42. That is to say, the second rounded part 45 is formed by a fillet. In the cross section in the longitudinal direction of the high voltage conductor 4, the second rounded part 45 has a cross-sectional shape with a circular arc shape which is convex away from the central axis C of the high voltage conductor 4. In this embodiment, the second rounded part 45 is provided between the third portion 43 and the second portion 42 and connects the third portion 43 to the second portion 42. A radius of curvature (a fillet value) R2 of the second rounded part 45 is set, for example, between 10 mm and 400 mm.

As illustrated in Fig. 11, the first portion 41 and the first rounded part 44 are disposed on a central portion side inside the metallic enclosure 1 with respect to the second portion 42. On the other hand, the third portion 43 and the second rounded part 45 are disposed on the insulating support 3 side with respect to the second portion 42. Moreover, the radius of curvature (the fillet value) R1 of the first rounded part 44 is larger than the radius of curvature (the fillet value) R2 of the second rounded part 45. That is to say, the first rounded part 44 has a gentle circular arc shape as compared with the second rounded part 45. In another aspect, a length L1 of the first rounded part 44 in the axial direction of the metallic enclosure 1 is longer than a length L2 of the second rounded part 45 in the axial direction of the metallic enclosure 1. In this embodiment, an example of a high-voltage-side particle trap 9 is formed of the second portion 42, the first rounded part 44, and the second rounded part 45 of the high voltage conductor 4. The high-voltage-side particle trap 9 is located closer to the insulating support 3 than the central portion inside the metallic enclosure 1.

Here, an example of the high voltage conductor 4 will be described in more detail.

The high voltage conductor 4 includes a first member 401, a second member 402, and a third member 403 which are joined together through welding or the like. The first member 401 forms a part of the above-described first portion 41. The first member 401 is formed in a cylindrical shape and is a pipe member having a hollow portion formed therein. The second member 402 forms another part of the above-described first portion 41, the second portion 42, the third portion 43, the first rounded part 44, and the second rounded part 45. The second portion 42 is solidly formed. Thus, also in the second portion 42 which becomes thinner than the first portion 41, a sufficient mechanical strength is ensured. The third member 403 forms an end portion of the high voltage conductor 4 and is connected to a connecting unit (a contact) 404 configured to connect the high voltage conductors 4 together.

Also, the second member 402 has a concave portion 402r at an end portion facing the third member 403. The concave portion 402r is recessed away from the third member 403. Thus, the second member 402 has a first end surface 402a and a second end surface 402b. The first end surface 402a is formed at a position deviated from the concave portion 402r. The second end surface 402b is a bottom surface of the concave portion 402r. The second end surface 402b is located closer to the first member 401 than the first end surface 402a.

On the other hand, the third member 403 has a convex portion 403p at an end portion facing the second member 402. The convex portion 403p protrudes toward the second member 402 and is inserted into the concave portion 402r of the second member 402. Thus, the third member 403 includes a first end surface 403a and a second end surface 403b. The first end surface 403a is formed at a position deviated from the convex portion 403p and faces the first end surface 402a of the second member 402. The second end surface 403b is a distal end surface of the convex portion 403p and faces the second end surface 402b of the second member 402. The second end surface 403b is located closer to the first member 401 than the first end surface 403a.

Here, a distance L3 between the first end surface 402a of the second member 402 and the first end surface 403a of the third member 403 is larger than a distance L4 between the second end surface 402b of the second member 402 and the second end surface 403b of the third member 403. For this reason, when a force for bringing the second member 402 and the third member 403 close to each other acts, before the first end surface 402a of the second member 402 and the first end surface 403a of the third member 403 come into contact with each other, the second end surface 402b of the second member 402 and the second end surface 403b of the third member 403 come into contact with each other. In other words, the first end surface 402a of the second member 402 and the first end surface 403a of the third member 403 does not come into contact with each other.

As illustrated in Fig. 11, the metallic particle capturing unit 10 is disposed below the second portion 42, the first rounded part 44, and the second rounded part 45 of the high voltage conductor 4. The metallic particle capturing unit 10 is formed of a tubular portion 10a extending downward from the bottom surface of the metallic enclosure 1 and a bottom portion 10b covering a lower portion of the tubular portion 10a. The bottom portion 10b is, for example, a lid detachably attached to the tubular portion 10a. The tubular portion 10a and the bottom portion 10b are provided at positions in which a distance from the high voltage conductor 4 is larger than a distance between the high voltage conductor 4 and an inner circumferential surface of the metallic enclosure 1 (for example, a distance between the first portion 41 of the high voltage conductor 4 and the inner circumferential surface of the metallic enclosure 1). The metallic particle capturing unit 10 is an example of "a metal-enclosure-side particle trap."

### (Action)

An action of the gas-insulated switchgear in this embodiment will be described below.

Fig. 12 illustrates an action when a negative DC voltage is applied to the high voltage conductor 4. For example, when the negative DC voltage is applied to the high voltage conductor 4 in at least one of a routine test, a field test, and when using a gas switchgear before the gas-insulated switchgear operates, the metallic particles 8 present in the bottom surface of the metallic enclosure 1 floats with electric charges. Moreover, after that, the metallic particles 8 shift to a firefly state in which the metallic particles 8 move in the vicinity of the high voltage conductor 4 randomly to cling to the high voltage conductor 4. Since the firefly state is easily maintained in a high electric field unit, the metallic particles 8 are attempted to stay at a transition portion in which the electric field increases and a diameter thereof decreases.

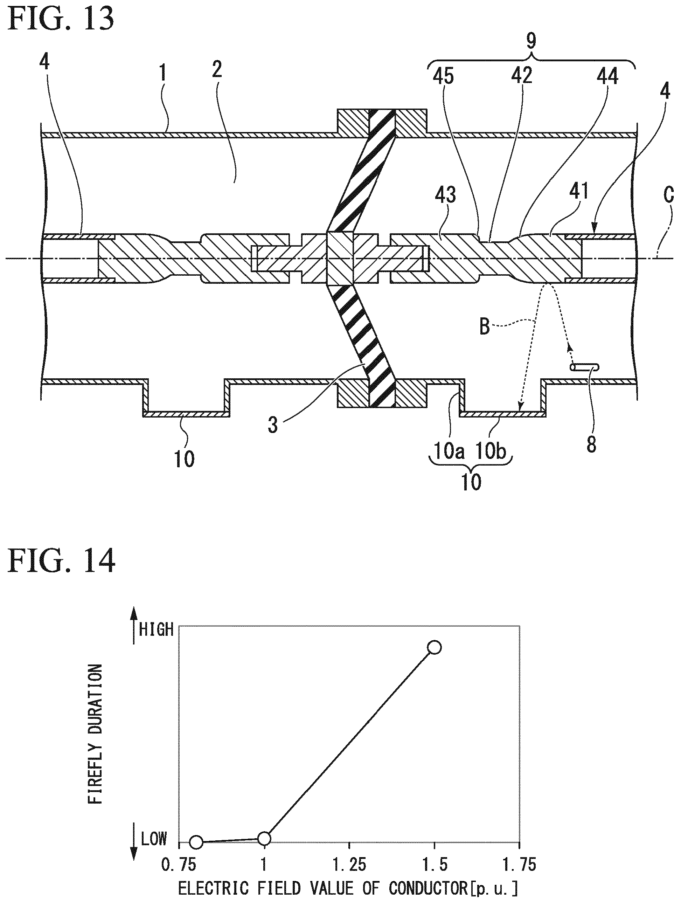

Here, as illustrated in Fig. 14, a maintenance time of the firefly state has a very strong correlation between the maintenance time and an electric field value of the high voltage conductor 4. Thus, in this embodiment, by providing the first rounded part 44 and the second rounded part 45 in the transition portion in which the electric field increases and the diameter thereof decreases, an appropriate electric field value (for example, 1.0 [p.u.] or less) is set over the entire high-voltage-side particle trap 9. In this case, since the metallic particles 8 cannot maintain a firefly state for a long time, the metallic particles 8 fall downward from the high-voltage-side particle trap 9. The metallic particle capturing unit 10 is provided at a place on which the metallic particles 8 fall. With regard to the high voltage conductor 4, the bottom portion 10b of the metallic particle capturing unit 10 is disposed at a position having a distance (for example, 5 mm or more) longer than a distance between the high voltage conductor 4 and the inner circumferential surface of the metallic enclosure 1. For this reason, an electric field inside the metallic particle capturing unit 10 is low. As a result, the metallic particles 8 falling inside the metallic particle capturing unit 10 do not fly outside of the metallic particle capturing unit 10 through re-floating. This series of behaviors of the metallic particles 8 is shown as a behavior trajectory A in Fig. 12.

In this embodiment, the radius of curvature R1 of the first rounded part 44 is larger than the radius of curvature R2 of the second rounded part 45. For this reason, a larger electric field relaxation effect is produced in the first rounded part 44. Thus, the duration of the firefly state is shorter. As a result, it is possible to fall the metallic particles 8 into the metallic particle capturing unit 10 in a shorter time. That is to say, when a large electric field relaxation effect is produced at the first rounded part 44 closer to a central portion inside the metallic enclosure 1 than the second rounded part 45, it is easy to capture the metallic particles 8 located in the central portion inside the metallic enclosure 1 or in the vicinity thereof and having the firefly state. Thus, it is possible to more efficiently capture the metallic particles 8 in the metallic enclosure 1.

Fig. 13 illustrates an action when a positive DC voltage is applied to the high voltage conductor 4. For example, when the positive DC voltage is applied to the high voltage conductor 4 in at least one of a routine test, a field test, and when using a gas switchgear before the gas-insulated switchgear operates, as in a case in which the negative DC voltage is applied, the metallic particles 8 present in the bottom surface of the metallic enclosure 1 float with electric charges. Here, when the positive DC voltage is applied, unlike a case in which the negative DC voltage is applied, the metallic particles 8 have a crossing state in which the metallic particles 8 collide with the high voltage conductor 4 only once. After that, the metallic particles 8 fall from the high-voltage-side particle trap 9 into the metallic particle capturing unit 10. Also in this case, as in the case in which the negative DC voltage is applied, the metallic particles 8 falling into the metallic particle capturing unit 10 do not fly outside of the metallic particle capturing unit 10 through re-floating. This series of behaviors of the metallic particles 8 is shown as a behavior trajectory B in Fig. 13.

### (Effects)

Here, as an comparative example, a constitution in which a negative DC voltage is applied to a high voltage conductor, metallic particles have a firefly state in which the metallic particles float to the vicinity of the high voltage conductor and move in the vicinity of the high voltage conductor to cling to the high voltage conductor, the metallic particles are caused to fall through a low electric field portion such as an opening portion provided in the high voltage conductor, and a metallic particle capturing unit provided immediately below the opening portion captures the metallic particles is conceivable.

In such a configuration, although the opening portion is a low electric field portion, a high electric field unit is present locally at an end portion of the opening portion. For this reason, the metallic particles continuously have the firefly state due to the high electric field unit at the end portion of the opening portion and it is difficult for the metallic particle capturing unit to capture the metallic particles in some cases. Furthermore, when a structure of the metallic particle capturing unit is complicated, the manufacturing costs thereof are expected to increase.

On the other hand, according to the constitution in this embodiment, for example, since the first rounded part 44 is provided at the boundary portion between the first portion 41 and the second portion 42, the local production of the high electric field unit in the vicinity of the second portion 42 is minimized. As a result, in a case in which a negative DC voltage is applied to the high voltage conductor 4, the metallic particles 8 are captured by the high-voltage-side particle trap 9 and then fall into the metallic particle capturing unit 10. Furthermore, in a case in which a positive DC voltage is applied to the high voltage conductor 4, the metallic particles 8 once cross the high voltage conductor 4 and then fall into the metallic particle capturing unit 10. After that, in both of the case in which the negative DC voltage is applied to the high voltage conductor 4 and the case in which the positive DC voltage is applied to the high voltage conductor 4, the metallic particles 8 do not move outside of the metallic particle capturing unit 10. Thus, it is possible to eliminate an adverse effect of the harmful metallic particles 8 in an insulation manner. In this embodiment, since it is possible to more efficiently capture the metallic particles 8 as described above, it is possible to improve the reliability of an insulating surface and reduce a size of a device.

Also, in this embodiment, when a force for bringing the second member 402 and the third member 403 close to each other acts, before the first end surface 402a of the second member 402 and the first end surface 403a of the third member 403 come into contact with each other, the second end surface 402b of the second member 402 and the second end surface 403b of the third member 403 come into contact with each other. In other words, contact between the first end surface 402a of the second member 402 and the first end surface 403a of the third member 403 is minimized. Thus, the production of metallic particles 8 due to contact between the first end surface 402a of the second member 402 and the first end surface 403a of the third member 403 and the falling of the metallic particles 8 into the metallic enclosure 1 are minimized. On the other hand, even when the second end surface 402b of the second member 402 and the second end surface 403b of the third member 403 come into contact with each other and metallic particles 8 are produced, the metallic particles 8 stay in a space between the concave portion 402r of the second member 402 and the convex portion 403p of the third member 403. For this reason, metallic particles 8 produced due to contact between the second end surface 402b of the second member 402 and the second end surface 403b of the third member 403 has no substantial adverse effect on the gas insulation opening device. Thus, it is possible to provide the gas insulation opening device having a more excellent insulation.

### (Modified example)

Fig. 15 illustrates a high voltage conductor 4 of a gas insulation opening device according to a modified example in the tenth embodiment. In the above-described tenth embodiment, a first rounded part 44 is provided over the entire region between a first portion 41 and a second portion 42.

On the other hand, in this embodiment, the first rounded part 44 is provided at a part of a boundary portion between the first portion 41 and the second portion 42. The first rounded part 44 is provided adjacent to the first portion 41. That is to say, the first rounded part 44 is provided at a transition portion in which a diameter thereof deceases from the first portion 41 toward the second portion 42. Moreover, an inclined portion 46 having a constant inclination with respect to a central axis C of the high voltage conductor 4 is provided between the first rounded part 44 and the second portion 42.

Even with such a constitution, by providing the first rounded part 44 of the boundary portion between the first portion 41 and the second portion 42, the local production of a high electric field unit in the high voltage conductor 4 is minimized. Thus, since it is possible to more efficiently capture the metallic particles 8 as in the tenth embodiment, it is possible to improve the reliability of an insulating surface and reduce a size of a device. It should be noted that the same applies to the second rounded part 45. That is to say, the second rounded part 45 may be provided at a part of a boundary portion between the third portion 43 and the second portion 42. Here, as in the tenth embodiment, when the first rounded part 44 and the second rounded part 45 are provided over the entire region between the first portion 41 and the second portion 42, an electric field relaxation effect is large and it is possible to more efficiently capture the metallic particles 8.

Although the first to tenth embodiments described above have been described, these can be applied in combination with each other. For example, the method of capture metallic particles described in the first to ninth embodiments can also be applied to the gas insulation opening device in the tenth embodiment.

While several embodiments of the present invention have been described, these embodiments have been presented as examples and are not intended to limit the scope of the invention. These embodiments can be implemented in various other forms and various omissions, substitutions, and modifications are possible without departing from the gist of the invention. These embodiments and modifications thereof are included in the scope of and gist of the invention as well as within the scope of the invention described in the claims and their equivalents.

### [Reference Signs List]

1 Metal enclosure
2 Insulating gas
3 Insulating support
4 High voltage conductor
5 Gas supply port
6 Insertion port
7 Metal particle capturing rod
8 Metal particle
10 Metal particle capturing unit
40a Metal particle attracting unit
40b Metal particle attracting hole
40c Metal particle attracting groove
41 First portion
42 Second portion
42a Linear part
43 Third portion
44 First rounded part
45 Second rounded part
10a Tubular portion
10b Bottom portion

## Claims

1. A gas-insulated switchgear comprising
a metallic enclosure (1) having an insulating gas enclosed therein; wherein the metallic enclosure (1) includes a bottom surface;
an electroconductive conductor (4) accommodated in the metallic enclosure (1);
an insulating support (3) configured to insulate and support the metallic enclosure (1) and the conductor (4); and
a metallic particle capturing unit (10) disposed under a part of the conductor (4), wherein the metallic particle capturing unit (10) is provided on the bottom surface of the metallic enclosure (1),
wherein the conductor (4) includes:
a first portion (41) extending linearly in an axial direction of the conductor (4) and forming a main portion of the conductor (4);
a second portion (42) thinner than the first portion (41); and
a third portion (43) which is positioned on a side opposite to the first portion (41) with respect to the second portion (42) and is thicker than the second portion (42);
**characterized in that**
the conductor (4) further includes:
a first rounded part (44) which is provided at a boundary portion between the first portion (41) and the second portion (42), and which is configured to, from the first portion (41) toward the second portion (42), be thinner, wherein a degree of inclination of the first rounded part (41) with respect to a central line (C) in a longitudinal direction of the conductor (4) gradually increases from the first portion (41) toward the second portion; and
a second rounded part (45) which is provided at a boundary portion between the third portion (43) and the second portion (42), and which is configured to, from the third portion (43) toward the second portion (42), be thinner, wherein a degree of inclination of the second rounded part (45) with respect to the central line (C) in the longitudinal direction of the conductor (4) gradually increases from the third portion (43) toward the second portion (42),
wherein the first portion (41) and the first rounded part (44) are disposed to be closer to a central portion in the metallic enclosure (1) than the second portion (42),
the third portion (43) and the second rounded part (45) are disposed to be closer to the insulating support (3) than the second portion (42),
a radius of curvature of the first rounded part (44) is larger than a radius of curvature of the second rounded part (45);
the second portion (42), the first rounded part (44), and the second rounded part (45) are exposed inside the enclosure (1) and form a high-voltage-side particle trap (9), and
the metallic particle capturing unit (10) is disposed below the second portion (42), the first rounded part (44), and the second rounded part (45).

2. The gas-insulated switchgear according to claim 1, wherein the metallic particle capturing unit includes:
a tubular portion (10a) provided at a position of which distance from the conductor (4) is larger than a distance between the conductor (4) and an inner circumferential surface of the metallic enclosure (1); and
a bottom portion (10b) configured to close a lower portion of the tubular portion (10a).

## Patentansprüche

1. Gasisolierte Schaltanlage, die umfasst:
ein metallisches Gehäuse (1), das darin ein eingeschlossenes Isoliergas aufweist; wobei das metallische Gehäuse (1) eine untere Fläche umfasst;
einen elektrisch leitfähigen Leiter (4), der in dem metallischen Gehäuse (1) untergebracht ist;
eine isolierende Stütze (3), die dazu ausgestaltet ist, das metallische Gehäuse (1) und den Leiter (4) zu isolieren und zu stützen; und
eine Metallpartikel-Einfangeinheit (10), die unter einem Teil des Leiters (4) angeordnet ist, wobei die Metallpartikel-Einfangeinheit (10) an der unteren Fläche des metallischen Gehäuses (1) bereitgestellt ist,
wobei der Leiter (4) umfasst:
einen ersten Abschnitt (41), der sich geradlinig in einer axialen Richtung des Leiters (4) erstreckt und einen Hauptabschnitt des Leiters (4) bildet;
einen zweiten Abschnitt (42), der dünner ist als der erste Abschnitt (41); und
einen dritten Abschnitt (43), der an einer in Bezug auf den zweiten Abschnitt (42) dem ersten Abschnitt (41) entgegengesetzten Seite positioniert ist und dicker ist als der zweite Abschnitt (42);
**dadurch gekennzeichnet, dass**
der Leiter (4) ferner umfasst:
einen ersten abgerundeten Teil (44), der an einem Grenzabschnitt zwischen dem ersten Abschnitt (41) und dem zweiten Abschnitt (42) bereitgestellt ist und der dazu ausgestaltet ist, vom ersten Abschnitt (41) hin zum zweiten Abschnitt (42) dünner zu sein, wobei ein Neigungsgrad des ersten abgerundeten Teils (41) in Bezug auf eine Mittellinie (C) in einer Längsrichtung des Leiters (4) allmählich vom ersten Abschnitt (41) hin zum zweiten Abschnitt zunimmt; und
einen zweiten abgerundeten Teil (45), der an einem Grenzabschnitt zwischen dem dritten Abschnitt (43) und dem zweiten Abschnitt (42) bereitgestellt ist und der dazu ausgestaltet ist, vom dritten Abschnitt (43) hin zum zweiten Abschnitt (42) dünner zu sein, wobei ein Neigungsgrad des zweiten abgerundeten Teils (45) in Bezug auf die Mittellinie (C) in der Längsrichtung des Leiters (4) allmählich vom dritten Abschnitt (43) hin zum zweiten Abschnitt (42) zunimmt,
wobei der erste Abschnitt (41) und der erste abgerundete Teil (44) angeordnet sind, um näher an einem mittleren Abschnitt in dem metallischen Gehäuse (1) zu liegen als der zweite Abschnitt (42),
der dritte Abschnitt (43) und der zweite abgerundete Teil (45) angeordnet sind, um näher an der isolierenden Stütze (3) zu liegen als zweite Abschnitt (42),
ein Krümmungsradius des ersten abgerundeten Teils (44) größer als ein Krümmungsradius des zweiten abgerundeten Teils (45) ist;
der zweite Abschnitt (42), der erste abgerundete Teil (44) und der zweite abgerundete Teil (45) im Inneren des Gehäuses (1) freiliegen und eine hochspannungsseitige Partikelfalle (9) bilden, und
die Metallpartikel-Einfangeinheit (10) unter dem zweiten Abschnitt (42), dem ersten abgerundeten Teil (44) und dem zweiten abgerundeten Teil (45) angeordnet ist.

2. Gasisolierte Schaltanlage nach Anspruch 1, wobei die Metallpartikel-Einfangeinheit umfasst:
einen rohrförmigen Abschnitt (10a), der an einer Position bereitgestellt ist, deren Abstand von dem Leiter (4) größer als ein Abstand zwischen dem Leiter (4) und einer inneren umlaufenden Fläche des metallischen Gehäuses (1) ist; und
einen Bodenabschnitt (10b), der dazu ausgestaltet ist, einen niedrigeren Abschnitt des rohrförmigen Abschnitts (10a) zu schließen.

## Revendications

1. Appareillage de commutation à isolation gazeuse comprenant
une enceinte métallique (1) comportant un gaz d'isolation renfermé à l'intérieur de celle-ci ; dans lequel l'enceinte métallique (1) inclut une surface de fond ;
un conducteur électroconducteur (4) logé dans l'enceinte métallique (1) ;
un support d'isolation (3) configuré pour isoler et supporter l'enceinte métallique (1) et le conducteur (4) ; et
une unité de capture de particules métalliques (10) disposée au-dessus d'une partie du conducteur (4), dans lequel l'unité de capture de particules métalliques (10) est prévue sur la surface de fond de l'enceinte métallique (1),
dans lequel le conducteur (4) inclut :
une première portion (41) s'étendant linéairement dans une direction axiale du conducteur (4) et formant une portion principale du conducteur (4) ;
une deuxième portion (42) plus mince que la première portion (41) ; et
une troisième portion (43) qui est positionnée sur un côté opposé à la première portion (41) par rapport à la deuxième portion (42) et est plus épaisse que la deuxième portion (42) ;
**caractérisé en ce que**
le conducteur (4) inclut en outre :
une première partie arrondie (44) qui est prévue au niveau d'une portion de limite entre la première portion (41) et la deuxième portion (42), et qui est configurée pour, depuis la première portion (41) vers la deuxième portion (42), être plus mince, dans lequel un degré d'inclinaison de la première partie arrondie (41) par rapport à une ligne centrale (C) dans une direction longitudinale du conducteur (4) augmente progressivement depuis la première portion (41) vers la deuxième portion ; et
une deuxième partie arrondie (45) qui est prévue au niveau d'une portion de limite entre la troisième portion (43) et la deuxième portion (42), et qui est configurée pour, depuis la troisième portion (43) vers la deuxième portion (42), être plus mince, dans lequel un degré d'inclinaison de la deuxième partie arrondie (45) par rapport à la ligne centrale (C) dans la direction longitudinale du conducteur (4) augmente progressivement depuis la troisième portion (43) vers la deuxième portion (42),
dans lequel la première portion (41) et la première partie arrondie (44) sont disposées pour être plus proches d'une portion centrale dans l'enceinte métallique (1) que la deuxième portion (42),
la troisième portion (43) et la deuxième partie arrondie (45) sont disposées pour être plus proches du support d'isolation (3) que la deuxième portion (42),
un rayon de courbure de la première partie arrondie (44) est plus grand qu'un rayon de courbure de la deuxième partie arrondie (45) ;
la deuxième portion (42), la première partie arrondie (44) et la deuxième partie arrondie (45) sont exposées à l'intérieur de l'enceinte (1) et forment un piège à particules côté haute tension (9), et
l'unité de capture de particules métalliques (10) est disposée au-dessous de la deuxième portion (42), de la première partie arrondie (44) et de la deuxième partie arrondie (45).

2. Appareillage de commutation à isolation gazeuse selon la revendication 1, dans lequel l'unité de capture de particules métalliques inclut :
une portion tubulaire (10a) prévue à une position à laquelle une distance depuis le conducteur (4) est plus grande qu'une distance entre le conducteur (4) et une surface circonférentielle intérieure de l'enceinte métallique (1) ; et
une portion de fond (10b) configurée pour fermer une portion inférieure de la portion tubulaire (10a).
